# EUROPÄISCHE PATENTSCHRIFT

(11) **EP 0 418 194 B1**
(45) Veröffentlichungstag und Bekanntmachung des Hinweises auf die Patenterteilung: **03.05.1995**
(21) Anmeldenummer: 90810655.2
(22) Anmeldetag: 30.08.1990
(51) Int. Cl.: B03C 7/00, B03B 9/06

(54) **Verfahren zur Materialtrennung von gemischt anfallenden Gegenständen aus Nichtmetall und nichtmagnetischem Metall**
Separation process of a material mixture containing mixed non-metallic and non-magnetic metallic bodies
Procédé de séparation de matériaux à partie d'objets mixtes non-métalliques et métalliques amagnétiques

(30) Priorität: 12.09.1989 CH 3320/89
(43) Veröffentlichungstag der Anmeldung: 20.03.1991
(73) Patentinhaber: ENVIRO EC AG, 6300 Zug (CH)
(72) Erfinder: Alavi, Kamal, CH-6318 Walchwil (CH)
(74) Vertreter: Kägi, Otto Patentanwalt

(56) Entgegenhaltungen:
- DE-A- 2 936 856
- FR-A- 864 577
- US-A- 3 897 330

## Beschreibung

Die Erfindung bezieht sich auf ein Verfahren und eine Vorrichtung zur Materialtrennung von gemischt anfallenden Gegenständen aus Nichtmetall und nichtmagnetischem Metall.

Wenn Gegenstände aus Nichtmetall und nichtmagnetischem Metall in grösseren Mengen gemischt anfallen und ordnungsgemäss entsorgt oder einer Wiederverwendung zugeführt werden sollen, müssen sie nach Materialien - Nichtmetall und Metall - getrennt werden.

Während ferromagnetische Gegenstände bzw. Teile relativ einfach und wirksam mittels Magnetabscheider aussortiert werden können, besteht für nichtmagnetische Metalle kein entsprechend wirksames maschinelles Verfahren; bekannt sind Anlagen, die mit elektronischen Metalldetektoren arbeiten, wobei jedoch der Trennungsgrad vielfach ungenügend ist, sofern solche Anlagen für die betreffenden Gegenstände überhaupt einsetzbar sind. Ein manuelles Aussortieren oder Trennen ist anderseits teuer bzw. wenig leistungsfähig, und je nach Art der Gegenstände kann diese Arbeit gesundheitsschädigend sein. Die Problematik soll am folgenden Beispiel verdeutlicht werden: Leere, wiederverwendbare Getränkeflaschen gelangen in grosser Zahl und in der Regel mit aufgesetzten Verschlusskappen in die Abfüllbetriebe, wo sie gereinigt, kontrolliert und neu gefüllt werden. Vor dem Reinigen werden die Verschlusskappen (in der Regel Schraubverschlüsse) maschinell von den Flaschen entfernt. Da sowohl Kunststoff- wie auch Aluminium-Verschlusskappen verwendet werden, fallen diese Verschlusskappen in grossen Mengen gemischt an, wobei wegen dem vorgeschriebenen Garantieverschluss (Aufreissverschluss) eine direkte Wiederverwendung nicht möglich ist. Zwar können die unterschiedlichen Verschlusskappen mühsam von Hand aussortiert werden.

Jedoch sind die Aluminiumkappen innen mit einer Dichtungseinlage aus Kunststoff versehen, der beim Wiedereinschmelzen des Aluminiums höchst unerwünscht ist.

Auch sind Einrichtungen bekannt (**DE-A-29 36 856**), bei denen die Aufbereitung von Abfallmaterial in Form von mit Metallfolien kaschierten Kunststoffresten so vorgesehen ist, dass die Materialien zunächst in einer Schneidmühle zu Granulat verarbeitet werden und im Rahmen des Prozesses die verbleibenden Metallteile via eines elektrostatischen Separators vom übrigen Granulat getrennt. Ein solcher Prozess hat bezüglich des elektrostatischen Separators hingegen einen schlechten Wirkungsgrad und die Reinheit der erhaltenen Endprodukte genügt hohen Anforderungen nicht.

Nachteilig ist weiter bei solchen Verfahren, dass die Feinanteile zu wenig separiert werden, bevor das Granulat dem elektrostatischen Separator zugeführt wird.

Es sind in diesem Zusammenhang Nassschwemmverfahren (**DD-C-69 559**) bekannt, wo nach der Zerkleinerung in Schlagmühlen, Feinanteile ausgeschieden werden. Dies geschieht wiederum nicht um die elektrostatische Separation zu verbessern, denn eine solche ist bei diesem Verfahren garnicht vorgesehen, sondern die Trennung erfolgt mittels Bandsinkabscheider.

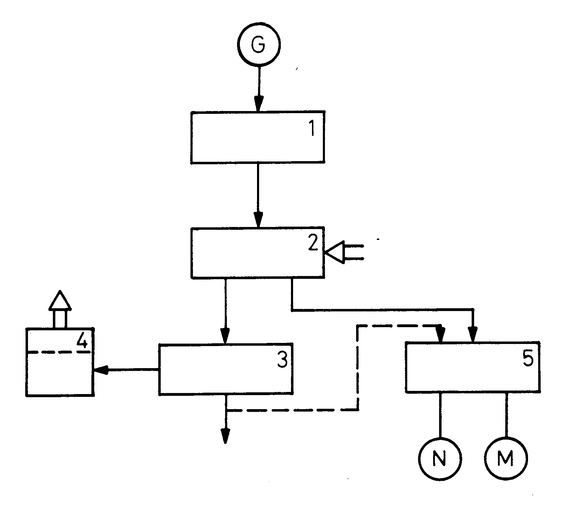

Durch die **US-A-3,897,330** ist vor dem elektrostatischen Abscheider ein pneumatischer Separator gezeigt. Dieser Separator dient jedoch nicht zur Reinigung des Partikelgemisches von Feinanteilen, sondern zur Abscheidung der Aluminium Fraktion (siehe auch Fig. 1).

Diese zuvor erwähnten Verfahren können somit keinen Hinweis zur Verbesserung der elektrostatischen Trennung mittels Abscheidung der Feinanteile vor der elektrostatischen Trennung geben.

Die Aufgabe der vorliegenden Erfindung besteht demnach darin, zur Materialtrennung von gemischt anfallenden Gegenständen aus Nichtmetall und nichtmagnetischem Metall ein verbessertes Verfahren vorzuschlagen, welches maschinell und wirksam durchführbar ist und sich insbesondere durch einen hohen Trennungsgrad durch elektrostatische Seperation auszeichnet.

Diese Aufgabe wird erfindungsgemäss dadurch gelöst, dass das Verfahren nur die folgenden Verfahrensschritte umfasst, die gemischt anfallenden Gegenstände werden mechanisch zu Partikeln aus entweder Nichtmetall oder Metall zerkleinert und mittels eines elektrostatischen Seperators in eine nichtmetallische und eine metallische Granulat-Fraktion separiert, wobei man nach dem Zerkleinern das Partikelgemisch von Feinanteilen reinigt und anschliessend die elektrostatische Separation erfolgt.

Dieses Verfahren lässt sich rationell für grosse Materialmengen durchführen und liefert Granulat-Fraktionen von hohem Trennungsgrad, so dass eine Wiederverwendung der Materialien oder deren problemlose Entsorgung (Deponie) möglich ist. Die Materialtrennung gelingt also unerwartet über den "Umweg" vorgängiger Zerkleinerung der Gegenstände, was zunächst zu einer noch innigeren Vermischung der Materialien führt. Der Grad der Zerkleinerung richtet sich nach der Art Gegenstände; die maximale Partikelgrösse sollte im allgemeinen nur gerade so klein sein, dass die einzelnen Partikel im wesentlichen nur Metall oder nur Nichtmetall enthalten, wobei der zulässige mittlere Restanteil des jeweils anderen Materials sich nach dem geforderten Trennungsgrad der Granulat-Fraktionen richtet.

Besondere Ausgestaltungen des erfindungsgemässen Verfahrens sind in den Ansprüchen 2 und 3 angegeben, während Anspruch 4 sich auf eine Vorrichtung zur Durchführung des Verfahrens nach Anspruch 1 bezieht.

Nachstehend wird die Erfindung anhand von Ausführungsbeispielen im Zusammenhang mit der Zeichnung näher erläutert. Diese veranschaulicht rein schematisch die einzelnen Verfahrensschritte bzw. die zu deren Durchführung verwendeten maschinellen Einheiten.

Das Verfahren wird im Zusammenhang mit der Figur zunächst in seiner Anwendung auf Flaschen-Verschlusskappen beschrieben, die gemischt entweder aus Kunststoff oder überwiegend aus Aluminium anfallen, wobei die Aluminium-Verschlusskappen in der Regel einen Dichtungs-Einsatz aus Kunststoff enthalten. Die gemischten Verschlusskappen G werden trocken mechanisch zerkleinert. Dies geschieht vorzugsweise in einem Shredder 1 mit rotierenden Schlagmessern, welcher ein Partikelgemisch mit einer maximalen Partikelgrösse von etwa 3 - 5 mm liefert. (Im Falle anderer Gegenstände, etwa solchen mit eher sprödem Nichtmetall-Anteil, kann die Zerkleinerung auch in einem anderen Aggregat, z.B. einer Schlagmühle oder dergleichen erfolgen). Bei der Zerkleinerung der Verschlusskappen entstehen somit Partikel, die nur aus Kunststoff bestehen, sowie andere Partikel, welche praktisch nur Aluminium enthalten, da im Zerkleinerungsaggregat der am Aluminium anhaftende Kunststoff mechanisch abgetrennt wird.

Das den Shredder 1 verlassende Partikelgemisch ist zur nachfolgenden Trennung in einem elektrostatischen Separator 5 bestimmt. Hierzu ist es jedoch erforderlich, dass man das Partikelgemisch vorgängig von den bei der Zerkleinerung entstandenen Feinanteilen reinigt, da diese den Betrieb des Separators beeinträchtigen bzw. den Aufwand bei der elektrostatischen Trennung beträchtlich erhöhen könnten.

Zwecks Reinigung wird das Partikelgemisch durch einen Windsichter 2 geleitet. Dieser besorgt die Trennung in ein gereinigtes Granulat-Gemisch, welches dem elektrostatischen Separator 5 zugeführt wird, und einen Anteil an leichten Partikeln einschliesslich Staub (Feinanteile). Es kann zweckmässig sein, die im Windsichter 2 abgeschiedenen Feinanteile mit dem Luftstrom durch einen Zyklon 3 zu leiten, in welchem eine Entstaubung erfolgt, wobei die staubhaltige Abluft schliesslich in einem Luftfilter 4 gereinigt wird; für manche Anwendungen und je nach Art der Stäube ist es notwendig, Luftfilter in explosionsgeschützter Ausführung zu verwenden. Am Zyklon-Ausgang verbleiben somit vom Staub befreite, gemischte Feinpartikel. Diese können entweder deponiert werden, oder sie können - bei einer Partikelgrösse von mehr als etwa 1 mm - ebenfalls dem elektrostatischen Separator 5 zugeführt werden, wie durch eine unterbrochene Linie angedeutet ist.

Der an sich bekannte elektrostatische Separator 5 besorgt die mechanisch/physikalische Separierung des gereinigten Granulat-Gemisches in eine nichtmetallische Granulat-Fraktion N und eine metallische Granulat-Fraktion M. Die beiden Granulat-Fraktionen fallen trocken und sauber, d.h. mit einem sehr geringen Anteil des jeweils anderen Materials an, so dass sie für eine Wiederverwendung bestens geeignet sind.

Das beschriebene Verfahren ermöglicht es, die Materialtrennung in effizienter Weise maschinell, durchzuführen. In einer Versuchsanlage ergab die Verarbeitung von gemischten Flaschen-Verschlusskappen folgende Resultate: In einem Shredder mit einer Leistung von 22 kW wurde eine Testmenge von 1'000 kg Kunststoffund Aluminium-Verschlusskappen auf eine Partikelgrösse von max. 3 - 5 mm zerkleinert. Die Reinigung im Windsichter ergab Feinanteile von lediglich 1 % (10 kg), welche nicht weiter verwertet wurden. Der elektrostatische Separator lieferte getrennte Granulat-Fraktionen, wobei der Anteil der Kunststoff-Fraktion 65 % und der Anteil der Aluminium-Fraktion 34% der Ausgangsmenge ausmachte (natürlich direkt abhängig von den Anteilen der Verschlusskappen). Wesentlich ist, dass die Kunststoff-Fraktion keinen praktisch messbaren Aluminium-Anteil enthielt, und dass in der Aluminium-Fraktion lediglich noch etwa 0,01% Kunststoff enthalten war. Die beiden Fraktionen konnten problemlos bei der Kunststoff-Verarbeitung rezirkuliert bzw. beim Wiedereinschmelzen von Aluminium verwendet werden.

Das Verfahren ist analog zur Materialtrennung von Stückgütern aus Verbundwerkstoff mit Nichtmetall- und nichtmagnetischem Metallanteil anwendbar, z.B. bei Gegenständen aus Glas oder Keramik mit eingeschlossenen oder anhaftenden Metallteilen. Beispielsweise können defekte Glühlampen und/oder Leuchtstofflampen, gesammeltes Altglas (Hohlglas) mit anhaftenden Bleioder Aluminium-Folien, Laborgeräte aus Spezialglas mit Armaturen oder Elektroden aus Metall usw. entsprechend verarbeitet werden. Bekanntlich ist es bei der Rezirkulation von Glas im allgemeinen notwendig, dass dieses praktisch frei von Metallen ist. Anderseits kann die Wiederverwertung von in den genannten Gegenständen enthaltenen Metallen lohnend sein, sofern diese praktisch frei von Glas- oder Keramik-Anteilen gewonnen werden können.

Je nach Art der Gegenstände kann sich eine mehrstufige Zerkleinerung der Gegenstände empfehlen, beispielsweise zuerst eine Grobzerkleinerung in einem Backenbrecher und anschliessend die weitere Zerkleinerung z.B. mittels einer Kugelmühle oder Hammermühle. Die weitere Verarbeitung und Trennung in eine nichtmetallische und eine metallische Granulat-Fraktion erfolgt grundsätzlich wie vorstehend beschrieben.

Ein weiteres Anwendungsgebiet des Verfahrens sind Verarbeitungsabfälle oder Herstellungsausschuss von Verbundwerkstoffen: Bei der Produktion und Verarbeitung von kaschierten Metallfolien (z.B. Kunststoff-beschichtete Aluminiumfolien), wie sie insbesondere in der Verpackungsindustrie verwendet werden, fallen ständig grössere Mengen solcher Abfälle bzw. unbrauchbare Gegenstände an. Dasselbe gilt für Sandwichplatten z.B. aus Aluminium/Kautschuk oder Aluminium/Al-Hydroxid. Abfälle und Ausschuss-Gegenstände dieser Art lassen sich nach dem vorstehenden Verfahren rationell entsorgen bzw. zur Wiederverwendung ihrer Materialkomponenten aufbereiten.

## Patentansprüche

1. Verfahren zur Materialtrennung von gemischt anfallenden Gegenständen (**G**) aus Nichtmetall und nichtmagnetischem Metall, wobei das Verfahren nur die folgenden Verfahrensschritte umfasst, die gemischt anfallenden Gegenstände (**G**) werden mechanisch zu Partikeln aus entweder Nichtmetall oder Metall zerkleinert und mittels eines elektrostatischen Seperators (**5**) in eine nichtmetallische (**N**) und eine metallische (**M**) Granulat-Fraktion separiert,
**dadurch gekennzeichnet**, **dass**
man nach dem Zerkleinern das Partikelgemisch von Feinanteilen reinigt und anschliessend die elektrostatische Separation erfolgt.

2. Verfahren nach Anspruch **1**,
**dadurch gekennzeichnet, dass**
das Zerkleinern einstufig in einem Shredder (**1**) oder in einer Schlagmühle erfolgt.

3. Verfahren nach Anspruch **1**, dadurch gekennzeichnet, dass das
**dadurch gekennzeichnet**, **dass**
das Zerkleinern in mehreren Stufen erfolgt.

4. Vorrichtung zur Durchführung des Verfahrens nach Anspruch **1**,
**dadurch gekennzeichnet**, **dass**
die Vorrichtung aus einem Shredder (**1**) oder einer Schlagmühle verbunden mit einem Windsichter (**2**) dessen Ausgang mit dem Eingang eines elektrostatischen Separators (**5**) verbunden ist, besteht.

## Claims

1. Process for the material separation of articles (G) occurring in a mixed state comprising non-metal and non-magnetic metal, the process comprising only the following process steps: the articles (G) arriving in a mixed state are mechanically comminuted to particles of either non-metal or metal, and separated by means of an electrostatic separator (5) into a non-metallic granulate fraction (N) and a metallic (M) granulate fraction, characterised in that after the comminuting the particle mixture is cleaned of fine fractions and then the electrostatic separation is carried out.

2. Process according to claim 1, characterised in that the comminuting is carried out in a single stage in a shredder (1) or in a beater mill.

3. Process according to claim 1, characterised in that the comminuting is carried out in a plurality of stages.

4. Apparatus for carrying out the process according to claim 1, characterised in that the apparatus comprises a shredder (1) or a beater mill connected to an air separator (2) the outlet of which is connected to the inlet of an electrostatic separator (5).

## Revendications

1. Procédé de séparation d'articles mélangés (G) constitués de matière non métallique et de matière métallique amagnétique, le procédé ne comprenant que les stades de traitement suivants : les articles mélangés (G) sont broyés mécaniquement en particules de matière non métallique ou de métal et, à l'aide d'un séparateur électrostatique (5), sont séparés en une fraction granulée non métallique (N) et en fraction granulée métallique (M), caractérisé en ce que l'on débarrasse, après broyage, le mélange particulaire des fractions fines et on effectue ensuite la séparation électrostatique.

2. Procédé selon la revendication 1, caractérisé en ce que le broyage se fait en une étape dans un déchiqueteur (1) ou dans un broyeur à percussion.

3. Procédé selon la revendication 1, caractérisé en ce que le broyage se fait en plusieurs étapes.

4. Dispositif permettant de réaliser le procédé selon la revendication 1, caractérisé en ce que le dispositif est constitué d'un déchiqueteur (1) ou d'un broyeur à percussion relié à un épurateur à air (2) dont la sortie est connectée a l'entrée d'un séparateur électrostatique (5).
